# EUROPÄISCHE PATENTSCHRIFT

(11) **EP 0 593 533 B1**
(45) Veröffentlichungstag und Bekanntmachung des Hinweises auf die Patenterteilung: **07.02.1996**
(21) Anmeldenummer: 92913389.0
(22) Anmeldetag: 30.06.1992
(51) Int. Cl.: E01B 19/00, E01B 1/00, F16F 1/36, F16F 1/44

(54) **STOSSDÄMPFERELEMENT**
SHOCK ABSORBER COMPONENT
ELEMENT AMORTISSEUR DE CHOCS

(30) Priorität: 09.07.1991 DE 4122682
(43) Veröffentlichungstag der Anmeldung: 27.04.1994
(73) Patentinhaber: CLOUTH GUMMIWERKE AG, D-50682 Köln (DE)
(72) Erfinder: ENGST, Wilhelm, D-5000 Köln 60 (DE); REPCZUK, Alexander, D-5000 Köln 1 (DE); WELLER, Horst, D-5920 Bad Berleburg 4 (DE)
(74) Vertreter: Schneider, Egon
(86) Internationale Anmeldenummer: DE9200541
(87) Internationale Veröffentlichungsnummer: WO9301355

(56) Entgegenhaltungen:
- DE-A- 2 911 319
- FR-A- 2 104 055
- FR-A- 2 212 011

## Beschreibung

Die Erfindung betrifft ein Stoßdämpferelement in Form einer flach verlegbaren Bahn oder Platte, wie es insbesondere - jedoch nicht ausschließlich - für die Lagerung der Gleiskörper von Eisenbahnanlagen zum Einsatz gelangt und sich dabei bspw. zwischen dem Oberbau und dem Unterbau der Gleisanlagen einbringen läßt, bestehend aus einer Kernschicht mit gebundenen Gummiteilchen und aus einer diese Kernschicht umgebenden Deckschicht aus flexibelen Material.

Ein Stoßdämpferelement dieser Gattung ist bereits bekannt durch die DE-OS 29 11 319.

Dieses bekannte Stoßdämpferelement aus elastomerem Material zeichnet sich dadurch aus, daß das elastomere Material aus einer durch ein Bindemittel zusammengehaltenen Mischung aus kompaktem Material, z. B. Gummi oder Polyurethan, mit Teilchen aus porösem Material, bspw. flexiblem Kunststoffschaum oder anderen porösen Materialien, wie Moosgummistücken, besteht.

Es wird hierdurch ein Stoßdämpferelement geschaffen, dessen stoßdämpfende und kraftabbauende Eigenschaften variierbar sind und welches auch im Falle einer kleinflächigen Belastung voll funktionsfähig bezüglich der stoßdämpfenden Eigenschaften bleibt.

Die Praxis hat gezeigt, daß das bekannte Stoßdämpferelement den hieran gestellten Anforderungen nicht in jeder Hinsicht gerecht werden kann.

So ist die Haltbarkeit bzw. Lebensdauer der bekannten Stoßdämpferelemente durch die besondere Materialkombination für die Kernschicht beeinträchtigt, weil sich diese nur unter Benutzung zusätzlicher Zwischen- und Bindeschichten mit den umgebenden Deckschichten vereinigen lassen. Nachteilig ist aber auch, daß die Kernschicht aus einem Gemisch von kompaktem Material und porösem Material gebildet ist und sich dadurch die stoßdämpfenden und kraftabbauenden Eigenschaften nur über einen Bereich hinweg beeinflußen lassen, der durch die möglichen Mischungsverhältnisse von Teilchen aus kompakten Material und Teilchen aus porösem Material bestimmbar ist.

Ziel der Erfindung ist nun die Ausräumung dieser Nachteile. Die zu lösende Aufgabe liegt demnach darin, ein gattungsgemäßes Stoßdämpferelement zu schaffen, das bei vereinfachter Fertigungsmöglichkeit einen höheren Gebrauchswert und/oder eine längere Lebensdauer erreicht und welches darüberhinaus auch verbesserte Dämpfungseigenschaften hat.

Ein Stoßdämpferelement nach der Erfindung ist dabei grundsätzlich dadurch gekennzeichnet, daß die Gummiteilchen der Kernschicht ausschließlich porös sind und die Deckschicht aus kompaktem Gummimaterial besteht sowie auf die Kernschicht direkt aufvulkanisiert ist.

Da bei dem erfindungsgemäßen Stoßdämpferelement die Gummi-Deckschicht unter Verzicht auf Zwischen- und Bindeschichten direkt auf die Kernschicht aufvulkanisiert wird, ergibt sich nicht nur eine vereinfachte Herstellung der Stoßdämpferelemente, sondern es wird auch ein optimaler Zusammenhalt zwischen der Kernschicht und der Deckschicht erzielt. Die ausschließliche Verwendung von porösem Gummimaterial für die Kernschicht macht es aber außerdem möglich, die Dämpfungseigenschaften gegenüber den zum Stand der Technik gehörenden Stoßdämpferelemente wesentlich zu verbessern.

Diese Verbesserung wird insbesondere dadurch offenbar, daß erheblich weichere Mattencharakteristiken erzielt werden können und vor allem auch bei relativ geringen Dicken eines flächig ausgebildeten Stoßdämpferelementes an allen Stellen eine gleichmäßige Einfederung bzw. Steifigkeit vorhanden ist. Gleichzeitig wird dadurch ein gleichmäßiger Gegendruck der Kernschicht beim Aufvulkanisieren der Deckschichten und somit eine gleichmäßige Aufvulkanisation erzielt.

Erfindungsgemäß wird auch vorgeschlagen, daß die Kernschicht aus mindestens zwei porösen Gummiteilchensorten besteht. Es kann sich dabei sowohl um natürliches als auch um synthetisches Material handeln, daß unterschiedliche Porositäten und/oder auch unterschiedliche Elastizitäten aufwest. Diese Voraussetzungen sind für die Beeinflußungen der Dämpfungseigenschaften eines erfindungsgemäßen Stoßdämpferelementes dann von wesentlicher Bedeutung, wenn die Gummi-Deckschicht unter Druck auf die Kernschicht vulkanisiert wird.

Erfindungsgemäß wird die Benutzung einer Kernschicht bevorzugt, in der die Größe der porösen Gummiteilchen in einem Bereich zwischen 2 und 18 mm liegt.

Bewährt hat es sich für manche Fälle auch, wenn die Gummi-Deckschicht nach det Erfindung eine oder mehrere Armierungseinlagen aus einem Vlies und/oder Gewebe enthält oder diese direkt auf der Oberseite fest angeordnet sind. Ebenso ist es möglich, die Deckschichten auf allen Seiten unterschiedlich dick auszuführen.

Wichtig ist es für den hauptsächlich vorgehenen Einsatzzweck auch, daß erfindungsgemäß die Deckschicht aus einem alterungs-und/oder ölbeständigen Gummimaterial besteht.

Die Dickenverhältnisse von Kernschicht und Deckschicht können im Rahmen der Erfindung zwischen 7:1 und 14:1 und zwar vorzugsweise zwischen 9:1 und 12:1 liegen.

Es ist erfindungsgemäß möglich, die Kernschicht aus Zell-, Moosoder Schaumgummischnitzeln zu bilden, oder zu ihrer Herstellung auch anderweitig zerkleinerte poröse Kautschukteile einzusetzen.

In jedem Falle können dabei die Gummiteilchen der Kernschicht miteinander eine durch Latexieren hergestellte Verbindung haben, wenn es auf die Erzielung besonders günstiger dynamischer Eigenschaften des Stoßdämpferelementes ankommt.

Desweiteren besteht eine besonders günstige Ausbildungsform darin, daß auf einer Seite die Deckschicht über die Kernschicht hinausragt, so daß ein Deckschichtstreifen gebildet wird, der beim Aneinanderlegen von mehreren mattenförmigen Stoßdämpfungselementen die Stoßfuge überdeckt.

In der Zeichnung ist ein Ausführungsbeispiel des Gegenstandes der Erfindung dargestellt. Dabei zeigen:
- Figur 1: im vertikalen Schnitt ein zwischen dem Oberbau und dem Unterbau der Gleiskörper von Eisenbahnanlagen als flach verlegte Bahn oder Platte angeordnetes Stoßdämpferelement und
- Figur 2: in größerem Maßstab einen Ausschnitt II aus dem in Figur 1 ersichtlichen bahn-, platten- oder mattenförmig flach verlegten Stoßdämpferelement.

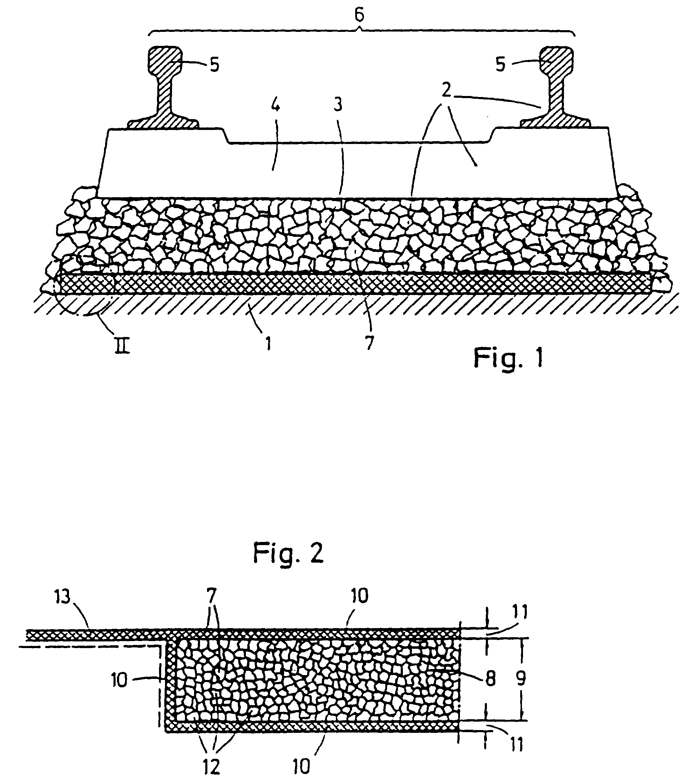

In Figur 1 der Zeichnung ist ein Gleiskörper von Eisenbahnanlagen in einem vertikalen Querschnitt gezeigt, welcher auf einem Unterbau 1, bspw. der Betonplatte einer Brücke oder eines Tunnels den Oberbau 2 trägt, der wiederum von der Schotterbettung 3, den darauf ruhenden Schwellen 4 und den wiederum hiervon getragenen Schienen 5 des Gleises 6 besteht.

Zwischen der Oberfläche des Unterbaus 2 und dem Oberbau 2, nämlich unterhalb des Schotterbettes 3 ist ein Stoßdämpferelement 7 in Form einer flach verlegten Bahn, Platte oder Matte angeordnet, welches parallel zur Längsrichtung des Gleises 6 verläuft und sich über eine Breite hinweg erstreckt, die mindestens gleich der, vorzugsweise etwas größer als die Länge der Schwellen 4 ausgelegt ist.

Das Stoßdämpferelement 7 hat dabei die Aufgabe, die Übertragung stoßförmiger Belastungen, welche aus dem Gleis 6 über die Schwellen 4 in das Schotterbett 3 des Oberbaus 2 eingehen, auf den Unterbau 1 zu vermeiden oder aber zumindest so abzuschwächen, daß sich hieraus resultierende Beeinträchtigungen und Beschädigungen des Unterbaus 1 nicht ergeben.

Das Stoßdämpferelement 7 ist in Figur 1 der Zeichnung lediglich schematisch dargestellt. Es besteht nach Figur 2 aus einer Kernschicht 8 von relativ großer Dicke 9 und einer diese allseitig einschließenden Deckschicht 10, die nur mit einer relativ geringen Dicke 11 vorgesehen ist und die vorzugsweise an einer Seite zur Überdeckung der Stoßstelle als Überlappungsstreifen 13 ausgebildet ist.

Bewährt hat es sich, wenn die Dickenverhältnisse von Kernschicht 8 und Deckschicht 10 zwischen 7:1 und 14.:1, vorzugsweise aber zwischen 9:1 und 12:1 liegen.

Die Kernschicht 8 des Stoßdämpferelementes 7 ist aus gebundenen Gummiteilchen 12 hergestellt, während die sie umgebende Deckschicht 10 aus einem flexiblem und kompakten Gummimaterial besteht.

Die Gummiteilchen 12 der Kernschicht 8 werden ausschließlich von porösem Material, wie Zell-, Moos- oder Schaumgummischnitzeln gebildet, die eine Größe bzw. Abmessung zwischen 2 und 18 mm haben sollten.

Bewährt hat es sich dabei auch, zur Bildung der Kernschicht mindestens zwei verschiedene, poröse Gummiteilchensorten zu verwenden.

Zur Herstellung der Kernschicht läßt sich gebundenes Gummigranulat benutzen, wobei dieses aus geschäumtem Gummimaterial unterschiedlicher Dichte bestehen kann.

Es sind auch Gemische aus regranuliertem Gummimaterial benutzbar.

Das Gemisch aus dem geschäumten Gummimaterial kann aus unterschiedlichen Kautschuktypen (z. B. Natur- und Synthesekautschuk) bestehen. Es kann sich aber auch um Material handeln, das nach unterschiedlichen Herstellungsverfahren gefertigt ist.

Je nach Einsatzbedingungen ist auch darauf zu achten, daß die zur Bildung der Kernschicht 8 benutzten, porösen Gummiteilchen 12 günstige dynamische Eigenschaften haben und insbesondere bei dynamischer Belastung sich nicht oder nur wenig steifer verhalten als bei statischer Belastung.

Wenn die aus kompaktem Gummimaterial bestehende Deckschicht 10 auf die Kernschicht 8 aufvulkanisiert wird, dann sollte dies zumindest unter einem gewissen Druck erfolgen, damit eine dauerhaft einwandfreie Verbindung der Deckschicht 10 mit der Kernschicht 8 herbeigeführt wird.

Vorgesehen ist auch, die Deckschicht aus einem alterungs- und/oder ölbeständigen Gummimaterial herzustellen. Dabei können in die Gummi-Deckschicht 10 auch eine oder mehrere Armierungseinlagen aus Vlies und/oder Gewebe eingearbeitet oder auf die Deckschicht aufgebracht werden.

Die richtige Auswahl sowohl des porösen Gummimaterials für die Kernschicht 8 als auch des kompakten Gummimaterials für die Deckschicht 10 ist auch insofern von Bedeutung als hierdurch das Entstehen einer einwandfrei ebenen Oberfläche am Stoßdämpferelement gewährleistet werden kann. Bei dieser einwandfrei ebenen Oberfläche läßt sich in die Deckschicht 10 bei Bedarf auch ein relativ feinstrukturiertes Riffel- bzw. Waffelmuster unmittelbar bei der Herstellung einformen. Die rutschsichere Verlegung des bahn-, platten- oder mattenförmigen Stoßdämpferelementes 7 wird hierdurch erleichtert.

### Liste der Bezugszeichen

- 1: Unterbau
- 2: Oberbau
- 3: Schotterbett
- 4: Schwelle
- 5: Schienen
- 6: Gleis
- 7: Stoßdämpferelement
- 8: Kernschicht
- 9: Dicke
- 10: Deckschicht
- 11: Dicke
- 12: Gummiteilchen
- 13: Überlappungsstreifen

## Patentansprüche

1. Stoßdämpferelement in Form einer flach verlegbaren Bahn, Platte oder Matte, insbesondere für die Lagerung der Gleiskörper von Eisenbahnanlagen, z. B. zur Einbringung zwischen dem Oberbau und dem Unterbau der Gleisanlagen, bestehend aus einer Kernschicht mit gebundenen Gummiteilchen und aus einer diese Kernschicht umgebenden Deckschicht aus flexiblem Material,
**dadurch gekennzeichnet,** daß die Gummiteilchen (12) der Kernschicht (8) ausschließlich porös sind und die Deckschicht (10) aus kompaktem Gummimaterial besteht sowie auf die Kernschicht (8) direkt aufvulkanisiert ist.

2. Stoßdämpferelement nach Anspruch 1,
**dadurch gekennzeichnet,** daß die Kernschicht (8) aus mindestens zwei porösen Sorten von Gummiteilchen (12) besteht.

3. Stoßdämpferelement nach einem der Ansprüche 1 und 2,
**dadurch gekennzeichnet,** daß die Gummi-Deckschicht (10) unter Druck auf die Kernschicht (8) vulkanisiert ist.

4. Stoßdämpferelement nach einem der Ansprüche 1 bis 3,
**dadurch gekennzeichnet,** daß die Größe der porösen Gummiteilchen (12) in einem Bereich zwischen 2 und 18 mm liegt.

5. Stoßdämpferelement nach einem der Ansprüche 1 bis 4,
**dadurch gekennzeichnet,** daß die Gummi-Deckschicht (10) eine oder mehrere Armierungseinlagen aus Vlies und/oder Gewebe enthält.

6. Stoßdämpferelement nach einem der Ansprüche 1 bis 5,
**dadurch gekennzeichnet,** daß die Deckschicht (10) aus einem alterungs- und/oder ölbeständigen Gummimaterial besteht.

7. Stoßdämpferelement nach einem der Ansprüche 1 bis 6,
**dadurch gekennzeichnet,** daß die Dickenverhältnisse (9/11) von Kernschicht (8) und Deckschicht (10) zwischen 7:1 und 14:1, vorzugsweise zwischen 9:1 und 12:1 liegen.

8. Stoßdämpferelement nach einem der Ansprüche 1 bis 7,
**dadurch gekennzeichnet,** daß die Kernschicht (8) aus Zell-, Moos- oder Schaumgumnischnitzeln oder -granulat gebildet ist.

9. Stoßdämpferelement nach einem der Ansprüche 1 bis 8,
**dadurch gekennzeichnet,** daß die Gummiteilchen (12) der Kernschicht (8) miteinander eine durch Latexieren hergestellte Verbindung haben.

10. Stoßdämpferelement nach einem der Ansprüche 1 bis 9,
**dadurch gekennzeichnet,** daß auf wenigstens einer Seite die Deckschicht über die Kernschicht hinausragt und die Stoßfuge zum Nachbarelement überdeckt.

## Claims

1. Shock absorbing element, in the form of a web, plate or mat which can be laid flat, more especially for supporting the track components of railway systems, e.g. for introducing between the upper structure and the lower structure of the track systems, comprising a core layer of bonded rubber particles and a cover layer of flexible material surrounding this core layer, characterised in that the rubber particles (12) of the core layer (8) are exclusively porous, and the cover layer (10) is formed from compact rubber material and vulcanised directly onto the core layer (8).

2. Shock absorbing element according to claim 1, characterised in that the core layer (8) is formed from at least two porous types of rubber particles (12).

3. Shock absorbing element according to one of claims 1 and 2, characterised in that the rubber cover layer (10) is vulcanised onto the core layer (8) under pressure.

4. Shock absorbing element according to one of claims 1 to 3, characterised in that the size of the porous rubber particles (12) lies within a range of between 2 mm and 18 mm.

5. Shock absorbing element according to one of claims 1 to 4, characterised in that the rubber cover layer (10) includes one or more reinforcing inserts formed from non-woven fabric and/or fabric.

6. Shock absorbing element according to one of claims 1 to 5, characterised in that the cover layer (10) is formed from an aging- and/or oil-resistant rubber material.

7. Shock absorbing element according to one of claims 1 to 6, characterised in that the thickness ratios (9/11) of core layer (8) and cover layer (10) lie between 7:1 and 14:1, preferably between 9:1 and 12:1.

8. Shock absorbing element according to one of claims 1 to 7, characterised in that the core layer (8) is formed from slices or granules of cellular, sponge or foam rubber.

9. Shock absorbing element according to one of claims 1 to 8, characterised in that the rubber particles (12) of the core layer (8) are interconnected by a latexing process.

10. Shock absorbing element according to one of claims 1 to 9, characterised in that the cover layer protrudes beyond the core layer on at least one side and covers the butt joint abutting the adjacent element.

## Revendications

1. Elément amortisseur de chocs sous la forme d'une bande, d'une plaque ou d'un mat que l'on peut poser à plat, destiné en particulier au logement des rails d'installations ferroviaires, par exemple pour être placé entre la superstructure et l'infrastructure des voies ferrées, comprenant une couche centrale avec des particules de caoutchouc liées et une couche de revêtement entourant cette couche centrale à base de matériau souple, caractérisé en ce que les particules de caoutchouc (12) de la couche centrale (8) sont exclusivement poreuses et la couche de revêtement (10) est à base de matériau caoutchouc compact et est vulcanisée directement sur la couche centrale (8).

2. Elément amortisseur de chocs selon la revendication 1, caractérisé en ce que la couche centrale (8) comprend au moins deux sortes poreuses de particules de caoutchouc (12).

3. Elément amortisseur de chocs selon l'une quelconque des revendications 1 et 2, caractérisé en ce que la couche de revêtement en caoutchouc (10) est vulcanisée sous pression sur la couche centrale (8).

4. Elément amortisseur de chocs selon l'une quelconque des revendications 1 à 3, caractérisé en ce que la taille des particules de caoutchouc (12) poreuses se situe dans un domaine compris entre 2 et 18 mm.

5. Elément amortisseur de chocs selon l'une quelconque des revendications 1 à 4, caractérisé en ce que la couche de revêtement en caoutchouc (10) contient une ou plusieurs insertions de blindage à base de voile et/ou de tissu.

6. Elément amortisseur de chocs selon l'une quelconque des revendications 1 à 5, caractérisé en ce que la couche de revêtement (10) est à base d'un matériau caoutchouc résistant au vieillissement et/ou à l'huile.

7. Elément amortisseur de chocs selon l'une quelconque des revendications 1 à 6, caractérisé en ce que les rapports d'épaisseur (9/11) de la couche centrale (8) et de la couche de revêtement (10) se situe entre 7/1 et 14/1, de préférence entre 9/1 et 12/1.

8. Elément amortisseur de chocs selon l'une quelconque des revendications 1 à 7, caractérisé en ce que la couche centrale (8) est formée de tranches ou de granulat de caoutchouc cellulaire, de caoutchouc spongieux ou de caoutchouc mousse.

9. Elément amortisseur de chocs selon l'une quelconque des revendications 1 à 8, caractérisé en ce que les particules de caoutchouc (12) de la couche centrale (8) ont entre elles une liaison établie par recouvrement de latex.

10. Elément amortisseur de chocs selon l'une quelconque des revendications 1 à 9, caractérisé en ce que la couche de revêtement dépasse de la couche centrale sur au moins un côté et recouvre le joint avec l'élément voisin.
